# EUROPÄISCHE PATENTSCHRIFT

(11) **EP 4 177 079 B1**
(45) Veröffentlichungstag und Bekanntmachung des Hinweises auf die Patenterteilung: **24.07.2024**
(21) Anmeldenummer: 22194089.3
(22) Anmeldetag: 06.09.2022
(51) Int. Cl.: B60C 9/18, D02G 3/48, B60C 9/00, B60C 9/22, B60C 15/06

(54) **FESTIGKEITSTRÄGERLAGE FÜR ELASTOMERE ERZEUGNISSE UND FAHRZEUGLUFTREIFEN**
REINFORCEMENT LAYER FOR ELASTOMERIC PRODUCTS AND PNEUMATIC VEHICLE TYRES
COUCHE DE RENFORCEMENT POUR PRODUITS ÉLASTOMÈRES ET PNEUS DE VÉHICULE

(30) Priorität: 08.11.2021 DE 102021212529
(43) Veröffentlichungstag der Anmeldung: 10.05.2023
(73) Patentinhaber: Continental Reifen Deutschland GmbH, 30175 Hannover (DE)
(72) Erfinder: Reese, Wolfgang, 30165 Hannover (DE)
(74) Vertreter: Continental Corporation

(56) Entgegenhaltungen:
- EP-A1- 3 441 237
- WO-A1-2014/001039
- WO-A1-2015/074778

## Beschreibung

Die Erfindung betrifft eine Festigkeitsträgerlage für elastomere Erzeugnisse, insbesondere für eine Gürtelbandage, aufweisend Korde als Festigkeitsträger, welche innerhalb der Lage im Wesentlichen parallel zueinander angeordnet und in elastomeres Material eingebettet sind, wobei die Korde jeweils genau zwei Garnen aufweisen, wobei die beiden Garne miteinander endverdreht sind, wobei die Summe der Feinheiten der beiden Garne maximal 1030 dtex beträgt und wobei ein Garn der beiden Garne ein Garn aus Polyamid 6.6 (PA 6.6) ist. Weiter betrifft die Erfindung einen Fahrzeugluftreifen aufweisend eine solche Festigkeitsträgerlage.

Festigkeitsträger zur Verstärkung verschiedener elastomerer Erzeugnisse sind hinreichend bekannt. So ist für Fahrzeugluftreifen bekannt, eine Gürtelbandage zu verwenden, die zumindest eine Festigkeitsträgerlage als Gürtelbandagenlage aufweist, die Gürtelränder abdeckt und wobei jede Lage parallel und im Wesentlichen in Umfangsrichtung verlaufende in Gummi eingebettete Festigkeitsträger enthält. Diese Gürtelbandage dient dazu, insbesondere im Hochgeschwindigkeitseinsatz, eine Erhebung des Reifen durch die im Fahrbetrieb auftretenden Fliehkräfte zu verhindern.

Die Bandage wird bei der Reifenherstellung in Form von Lagen, Streifen oder Einzel-Korden mit in eine unvulkanisierte Kautschukmischung eingebetteten Festigkeitsträgern aufgebracht, die auf den Gürtel gewickelt oder gespult werden. Die Festigkeitsträger werden in Kautschuk eingebettet, indem eine Schar von im Wesentlichen parallel liegenden fadenförmigen Festigkeitsträgern, die in der Regel thermisch und/oder zur besseren Haftung am einbettenden Gummi in der der fachkundigen Person bekannten Art mit einer Imprägnierung vorbehandelt sind, in Längsrichtung einen Kalander oder einen Extruder zur Ummantelung mit der Kautschukmischung durchlaufen.

Die Entwicklung geht dahin, den Rollwiderstand des Reifens zu verringern. Hierzu sind ein geringes Gewicht des Reifens sowie eine geringe Hysterese der Festigkeitsträger der Gürtelbandagenlage vorteilhaft.

Der Wulstverstärker ist ganz oder teilweise im Wulstbereich angeordnet. Üblicherweise ist er axial außerhalb und anschließend an die Karkasse positioniert. Der Wulstverstärker beinhaltet zumindest eine Festigkeitsträgerlage als Wulstverstärkerlage, welche ringkreisförmig im Bereich des Wulstes um den Reifen umläuft.

Auch für Fördergurte, Antriebsriemen, Schläuche und Luftfederbälge ist der Einsatz von Festigkeitsträgerlagen mit Festigkeitsträgern mit auf die Anforderungen abgestimmten physikalischen Eigenschaften notwendig.

Die DE 102012105766 A1 offenbart eine Festigkeitsträgerlage für elastomere Erzeugnisse, wie eine Gürtelbandage, aufweisend Hybridkorde der Konstruktion HMNS-PET 1440 dtex + PA 6.6 1400 dtex. Die durch die Gesamtfeinheit des Hybridkordes bedingte große Lagenstärke der Festigkeitsträgerlage wirkt sich negativ auf den Rollwiderstand des Reifens aus.

Aus der EP 3254870 A1 ist eine Gürtelbandagenlage aufweisend einen Kord aus zwei miteinander endverdrehten Garnen aus PA 6.6 der Konstruktion PA 6.6 470 dtex x 2 auf. PA 6.6 weist eine für die Verwendung als Material für Festigkeitsträger der Gürtelbandage vorteilhafte Schrumpfeigenschaften auf, was eine gute Hochgeschwindigkeitstauglichkeit des Reifens ermöglicht. Ein Nachteil von PA 6.6 sind allerdings seine Hystereseeigenschaften, die sich nachteilig auf den Rollwiderstand auswirken.

Weitere Festigkeitsträgerlagen die Hybridkorde mit Garnen aus PA 6.6 und HMNS-PET verwenden, sind aus den Dokumenten WO 2014/001039 A1 und EP 3 441 327 A1 bekannt.

Eine der Aufgaben der Erfindung besteht darin, eine Festigkeitsträgerlage für elastomere Erzeugnisse, insbesondere für eine Gürtelbandage, zur Verfügung zu stellen, die bei weiterhin ausreichenden Schrumpfeigenschaften ein verbessertes Hystereseverhalten aufweist. Ebenso soll das Gewicht dieser Festigkeitsträgerlage nicht signifikant erhöht sein.

In Bezug auf die Festigkeitsträgerlage wird die Aufgabe dadurch gelöst, dass ein weiters Garn der beiden Garne des Kords ein Garn aus high-modulus-normal-shrinkage - Polyethylenterephthalat (HMNS - PET) ist, dass das Garn aus HMNS-PET eine größere Feinheit aufweist als das Garn aus PA 6.6 und dass die gewichtete Differenz der Feinheiten der beiden Garne größer als 0 und maximal 0,23 beträgt.

Eine weitere Aufgabe der Erfindung besteht darin, einen Fahrzeugluftreifen, insbesondere einen Fahrzeugluftreifen für einen Personenkraftwagen, einen Van oder einen Light-Truck, bereitzustellen, der bei weiterhin guten Hochgeschwindigkeitseigenschaften einen geringeren Rollwiderstand aufweist.

Gelöst wird diese Aufgabe dadurch, dass der Fahrzeugluftreifen, insbesondere der Fahrzeugluftreifen für einen Personenkraftwagen, einen Van oder einen Light-Truck, zumindest eine Festigkeitsträgerlage gemäß der Erfindung aufweist.

Überraschenderweise wurde gefunden, dass sich eine solche erfindungsgemäße Festigkeitsträgerlage für elastomere Erzeugnisse, insbesondere für eine Gürtelbandage eines Fahrzeugluftreifens, bei weiterhin ausreichenden Schrumpfeigenschaften durch ein verbessertes Hystereseverhalten auszeichnet. Zusätzlich ist es dabei gelungen, dass das Gewicht dieser Festigkeitsträgerlage nicht signifikant erhöht ist.

Ein Fahrzeugluftreifen, insbesondere ein Fahrzeugluftreifen für einen Personenkraftwagen, einen Van oder einen Light-Truck, der wenigstens eine erfindungsgemäße Festigkeitsträgerlage in wenigstens einem Bauteil enthält, weist bei weiterhin guten Hochgeschwindigkeitseigenschaften einen geringeren Rollwiderstand sowie ein nahezu gleichbleibendes Reifengewicht auf. Bevorzugt ist die erfindungsgemäße Festigkeitsträgerlage dabei als Gürtelbandagenlage und/oder Wulstverstärkerlage des Fahrzeugluftreifens ausgebildet.

Im Rahmen der vorliegenden Erfindung stellen Korde linienförmige Gebilde dar, die aus zwei oder mehr miteinander endverdrehten Garnen bestehen. Ein Garn ist im Rahmen der vorliegenden Erfindung in Anlehnung an die DIN 60900 ein linienförmiges Gebilde, das aus einzelnen Filamenten oder Fasern besteht. Die Filamente oder Fasern eines Garns können miteinander erstverdreht sein. Ein Garn aus einem Material ist ganz oder teilweise aus diesem Material gebildet.

Die gewichtete Differenz der Feinheiten der beiden Garne ist definiert als das Verhältnis des Betrags der Differenz der Feinheiten der beiden Garne des Kordes zur Summe der Feinheiten der beiden Garne des Kordes, also Betrag( Feinheit(Garn aus HMNS-PET) - Feinheit(Garn aus PA 6.6) ) / (Feinheit(Garn aus HMNS-PET) + Feinheit(Garn aus PA 6.6)).

Erfindungsgemäß enthält die Festigkeitsträgerlage Korde aus zwei miteinander endverdrehten Garnen aus HMNS-PET und aus PA6.6. HMNS-PET hat im Vergleich zu PA 6.6 leicht nachteilige Schrumpfeigenschaften, insbesondere aber bessere Schrumpfeigenschaften als HMLS (high-modulus-low-shrinkage)-PET. Eine andere geläufige Bezeichnung für HMNS-PET ist Regular-PET. HMNS-PET hat im Vergleich zu PA 6.6 jedoch stark verbesserte Hystereseeigenschaften. Es hat sich gezeigt, dass bei einer gewichteten Differenz der Feinheiten der beiden Garne von größer 0 und maximal 0,23 verbesserte Eigenschaften der Festigkeitsträgerlage aufweisend derartige Korde erreichbar sind. Dadurch, dass die Feinheit des Garns aus HMNS-PET größer ist als die Feinheit des Garns aus PA 6.6 sind vorteilhafte Hystereseeigenschaften ermöglicht, insbesondere im Vergleich zu Korden einer weitgehend entsprechenden Summe der Feinheiten der beiden Garne, wobei aber die Feinheit des Garns aus PA 6.6 gleich oder größer ist als die Feinheit des Garns aus HMNS-PET oder aber beide Garne aus PA 6.6 sind. Weiter hat es sich gezeigt, dass bei einer gewichteten Differenz der Feinheiten der beiden Garne von maximal 0,23 weiterhin ausreichende Schrumpfeigenschaften erreichbar sind. Eine gewichtete Differenz in der Feinheit der beiden Garne von größer als 0,23 jedoch führt zu einer zu großen Asymmetrie in der Feinheit der beiden Garne, was die Stabilität des Kordes im Twist-Prozess nachteilig beeinflussen kann. Gleichzeitig sind die Schrumpfeigenschaften des Kordes durch den zu geringen Anteil an PA 6.6 nachteilig verschlechtert.

Es hat sich gezeigt, dass eine erfindungsgemäße Festigkeitsträgerlage für elastomere Erzeugnisse, insbesondere für eine Gürtelbandage, mit dem Kord aus dem Garn aus HMNS-PET und dem Garn aus PA 6.6, wobei das Garn aus HMNS-PET eine größere Feinheit aufweist als das Garn aus PA 6.6 und die gewichtete Differenz der Feinheiten der beiden Garne maximal 0,23 beträgt, bei weiterhin ausreichenden Schrumpfeigenschaften verbesserte Hystereseeigenschaften aufweist. Die geringe maximale Summe der Feinheiten der beiden Garne von maximal 1030 dtex ermöglicht es dabei, eine Festigkeitsträgerlage für elastomere Erzeugnisse, insbesondere für eine Gürtelbandage, zur Verfügung zu stellen, die zudem weiterhin ein geringes Gewicht aufweist. Trotz der geringen Summe der Feinheiten der beiden Garne ist durch die begrenzte gewichtete Differenz der Feinheiten der beiden Garne und damit die begrenzte Asymmetrie in der Feinheit der beiden Garne ist die Stabilität des Kordes im Twist-Prozess weiterhin sichergestellt.

Im Rahmen der Erfindung hat sich herausgestellt, dass sich eine solche Festigkeitsträgerlage sehr gut als Gürtelbandagenlage von Fahrzeugluftreifen eignet. Ein Fahrzeugluftreifen aufweisend eine solche Festigkeitsträgerlage als Gürtelbandagenlage weist bei weiterhin guten Hochgeschwindigkeitseigenschaften einen verminderten Rollwiderstand auf. Der verminderte Rollwiderstand ist durch die vorteilhaften Hystereseeigenschaften des Kordes bzw. der Festigkeitsträgerlage bei gleichzeitig weiterhin geringer Dicke und geringem Gewicht der Gürtelbandagenlage bedingt. Die guten Hochgeschwindigkeitseigenschaften sind durch die weiterhin ausreichenden Schrumpfeigenschaften des Kordes bzw. der Festigkeitsträgerlage ermöglicht. Weiterhin ausreichende Schrumpfeigenschaften sind auch zur Reduktion bzw. Vermeidung von Stauchungen an und neben der Gürtelkante im Reifen von Vorteil.

Auch ein Fahrzeugluftreifen aufweisend eine solche Festigkeitsträgerlage als Wulstverstärkerlage weist vorteilhafte Eigenschaften durch die vorteilhaften Hystereseeigenschaften sowie weiterhin ausreichenden Schrumpfeigenschaften sowie dem geringen Gewicht der Festigkeitsträgerlage auf.

Die Korde der erfindungsgemäßen Festigkeitsträgerlage können alle die gleiche Konstruktion aufweisen.

Eine vorteilhafte Ausführungsform ist dadurch gegeben, dass die Korde jeweils eine Feinheit von 510 dtex bis 1020 dtex, bevorzugt von 595 dtex bis 900 dtex, besonders bevorzugt von 672 dtex bis 710 dtex, aufweisen.

Korde derartiger Feinheit ermöglichen einen hervorragenden Kompromiss aus prozesstechnischem Aufwand sowie Gewicht der Festigkeitsträgerlage. Korde, die eine geringere aufweisen, sind prozesstechnisch aufwändiger in der Herstellung der Festigkeitsträgerlage. Korde, die eine größere Feinheit aufweisen, bedingen ein nachteiliges Gewicht der Festigkeitsträgerlage, insbesondere einen nachteiligen Rollwiderstand bei einem Fahrzeugluftreifen aufweisend eine solche Festigkeitsträgerlage als Gürtelbandagenlage und/oder Wulstverstärkerlage.

Eine vorteilhafte Ausführungsform ist dadurch gegeben, dass die gewichtete Differenz der Feinheiten der beiden Garne der Korde 0,01 bis 0,21, bevorzugt 0,014 bis 0,08, besonders bevorzugt 0,014 bis 0,072, beträgt.

Eine Festigkeitsträgerlage aufweisend einen Kord mit einer gewichteten Differenz von kleiner als 0,01 weist einen für die Hystereseeigenschaften nachteiligen hohen Anteil an PA 6.6 auf. Eine gewichtete Differenz von maximal 0,21, bevorzugt von maximal 0,08, besonders bevorzugt von maximal 0.072, bedingt eine besonders gute Stabilität des Kordes im Twist-Prozess.

Eine vorteilhafte Ausführungsform ist dadurch gegeben, dass die gewichtete Differenz der Feinheiten der beiden Garne der Korde 0,20 bis 0,23 beträgt.

Eine vorteilhafte Ausführungsform ist dadurch gegeben, dass das Garn aus HMNS-PET eine Feinheit von 360 dtex aufweist, bevorzugt dass das Garn aus HMNS-PET eine Feinheit von 360 dtex und das Garn aus PA 6.6 eine Feinheit von 235 dtex bis 350 dtex aufweist, besonders bevorzugt, dass das Garn aus HMNS-PET eine Feinheit von 360 dtex und das Garn aus PA 6.6 eine Feinheit von 312 dtex bis 350 dtex aufweist.

Die Festigkeitsträgerlage kann somit mit geringer Dicke ausgestattet sein, wodurch die Hysterese und das Gewicht der Festigkeitsträgerlage vorteilhaft gering sind. Trotz der geringen Summe der Feinheiten der beiden Garne weist ein solcher Kord, bei dem das Garn aus HMNS-PET eine Feinheit von 360 dtex und das Garn aus PA 6.6 insbesondere eine Feinheit von 312 dtex bis 350 dtex aufweist, eine gute Stabilität im Twist-Prozess auf.

Ein Fahrzeugluftreifen aufweisend zumindest eine solche Festigkeitsträgerlage, insbesondere als Gürtelbandagenlage und/oder Wulstverstärkerlage, weist eine gute Hochgeschwindigkeitstauglichkeit und einen besonders geringen Rollwiderstand auf.

Eine vorteilhafte Ausführungsform ist dadurch gegeben, dass das Garn aus PA 6.6 eine Feinheit von 235 dtex aufweist, bevorzugt dass das Garn aus PA 6.6 eine Feinheit von 235 dtex und das Garn aus HMNS-PET eine Feinheit von 275 dtex bis 360 dtex aufweist.

Die Festigkeitsträgerlage kann somit mit besonders geringer Dicke ausgestattet sein, wodurch das Gewicht der Festigkeitsträgerlage vorteilhaft gering sind. Die besonders geringe Feinheit des Garns aus PA 6.6 bedingt die besonders guten Hystereseeigenschaften des Kordes. Trotz der sehr geringen Summe der Feinheiten der beiden Garne weist ein solcher Kord, bei dem das Garn aus PA 6.6 eine Feinheit von 235 dtex und das Garn aus HMNS-PET insbesondere eine Feinheit von 275 dtex aufweist, eine gute Stabilität im Twist-Prozess auf.

Ein Fahrzeugluftreifen aufweisend zumindest eine solche Festigkeitsträgerlage, insbesondere als Gürtelbandagenlage und/oder als Wulstverstärkerlage, weist eine besonders gute Hochgeschwindigkeitstauglichkeit und einen geringen Rollwiderstand auf.

Eine vorteilhafte Ausführungsform ist dadurch gegeben, dass das Garn aus HMNS-PET eine Feinheit von 550 dtex aufweist, bevorzugt dass das Garn aus HMNS-PET eine Feinheit von 550 dtex und das Garn aus PA 6.6 eine Feinheit von 350 dtex bis 470 dtex aufweist.

Die Festigkeitsträgerlage weist eine etwas größere Festigkeit bei noch immer geringer Dicke auf. Ein solcher Kord, bei dem das Garn aus HMNS-PET eine Feinheit von 550 dtex und das Garn aus PA 6.6 insbesondere eine Feinheit von 470 dtex aufweist, weist eine gute Stabilität im Twist-Prozess auf.

Ein Fahrzeugluftreifen aufweisend zumindest eine solche Festigkeitsträgerlage, insbesondere als Gürtelbandagenlage und/oder Wulstverstärkerlage, weist eine besonders gute Hochgeschwindigkeitstauglichkeit und einen geringen Rollwiderstand auf.

Eine vorteilhafte Ausführungsform ist dadurch gegeben, dass der Twistfaktor der Korde einen Wert von 130 bis 230, bevorzugt von 140 bis 220, besonders bevorzugt von 150 bis 210, aufweist.

Vorteilhaft ist es, wenn der Twistfaktor des Kordes in einem Bereich von 130 bis 230, bevorzugt von 140 bis 220, besonders bevorzugt von 150 bis 210, liegt, wobei der Twistfaktor definiert ist als Twistfaktor = Twist [t/m] x (Feinheit [dtex]/ 10000)^{1/2}.

Der Twistfaktor ist ein Maß für die Endverdrehung pro Meter des Kordes, bezogen auf die Feinheit des Kordes. Dieser Twistfaktor stellt einen vorteilhaften Kompromiss bezüglich Ermüdungsbeständigkeit und Festigkeit dar. Ein geringerer Twistfaktor wäre nachteilig in Bezug auf die Ermüdungsbeständigkeit, ein höherer Twistfaktor würde eine geringere Festigkeit des Festigkeitsträgers bedeuten. Jedes Garn der erfindungsgemäßen Festigkeitsträgerlage kann in S- oder in Z-Richtung verdreht sein. Zweckmäßigerweise weisen die zwei Garne des Kords die gleiche Drehrichtung auf. Sie sind also entweder alle in S- und/oder in Z- Richtung verdreht.

Erfindungsgemäß sind die zwei Garne des Kordes in S- oder in Z-Richtung miteinander endverdreht. Zweckmäßigerweise ist die Drehrichtung zum Kord der Drehrichtung der Garne entgegengesetzt. Hierdurch sind interne Spannungen im Kord reduziert.

Um eine zuverlässige Haftung von textilen Festigkeitsträgern zum Gummi zu gewährleisten, ist es zweckmäßig, dass die Korde mit einer Haftimprägnierung zur Gewährleistung der Haftung der Festigkeitsträger zum Gummi versehen sind. Beispielsweise kann diese Haftimprägnierung mit einem RFL-Dip im 1- oder 2-Bad-Verfahren erfolgen. Es sind aber auch alle weiteren dem Fachmann bekannten Verfahren und Haftmittel zur Imprägnierung denkbar.

Eine vorteilhafte Ausführungsform ist dadurch gegeben, dass die Korde mit einem Zwischenabstand von 0,20 mm bis 1,0 mm, bevorzugt von 0,30 mm bis 0,90 mm, besonders bevorzugt von 0,35 mm bis 0,80 mm, angeordnet sind.

Der Zwischenabstand ist der zwischen den Korden gemessene Abstand zweier benachbarter Korde der Festigkeitsträgerlage. Ein derartiger Zwischenabstand ermöglicht einen vorteilhaften Gummierungsprozess und vermeidet für die Dauerhaltbarkeit nachteilige zu hohe Scherspannungen im Gummi der Festigkeitsträgerlage, insbesondere im Betrieb eines Reifens aufweisend eine derartige Festigkeitsträgerlage, z.B. als Gürtelbandagenlage und/oder Wulstverstärkerlage.

Die Erfindung betrifft auch einen Fahrzeugluftreifen, insbesondere einen Fahrzeugluftreifen für einen Personenkraftwagen, einen Van oder einen Light-Truck, aufweisend eine erfindungsgemäße Festigkeitsträgerlage gemäß einer oder mehrerer der vorbeschriebenen Ausführungsformen.

Ein Fahrzeugluftreifen, insbesondere einen Fahrzeugluftreifen für einen Personenkraftwagen, einen Van oder einen Light-Truck, üblicher Bauart weist in der Regel eine Karkasse insbesondere radialer Bauart mit insbesondere textilen Karkassfestigkeitsträgern auf. Weiter weist ein solcher Reifen einen profilierten Laufstreifen, einen zumindest zweilagigen Gürtel und eine den Gürtel zumindest an den Gürtelkanten bedeckende Gürtelbandage aufweisend zumindest eine Gürtelbandagenlage mit weitgehend in Umfangsrichtung der Reifens verlaufenden Korden auf. In einem Wulstbereich kann der Reifen eine Wulstverstärker mit zumindest einer Wulstverstärkerlage aufweisen, welche ringkreisförmig im Bereich des Wulstes um den Reifen umläuft.

Eine vorteilhafte Ausführungsform des Fahrzeugluftreifens, insbesondere des Fahrzeugluftreifens für einen Personenkraftwagen, einen Van oder einen Light-Truck, ist dadurch gegeben, dass die Festigkeitsträgerlage eine Gürtelbandagenlage und/oder eine Wulstverstärkerlage ist.

Weist der Fahrzeugluftreifen, insbesondere der Fahrzeugluftreifen für einen Personenkraftwagen, einen Van oder einen Light-Truck, eine Gürtelbandagenlage auf, so verlaufen die Korde der Gürtelbandagenlage weitgehend in Umfangsrichtung des Reifens, insbesondere in einem Winkel zwischen 0° und 5° zur Umfangsrichtung des Reifens.

Ein Fahrzeugluftreifen, insbesondere ein Fahrzeugluftreifen für einen Personenkraftwagen, einen Van oder einen Light-Truck, aufweisend eine erfindungsgemäße Gürtelbandagenlage, zeichnet sich durch gute Hochgeschwindigkeitseigenschaften, einen geringeren Rollwiderstand sowie ein nahezu gleichbleibendes Reifengewicht aus. Die Gürtelbandage kann eine oder mehrere Gürtelbandagenlagen aufweisen. Zumindest eine, insbesondere alle, Gürtelbandagenlagen sind dabei erfindungsgemäß ausgeführt.

Ein Fahrzeugluftreifen, insbesondere ein Fahrzeugluftreifen für einen Personenkraftwagen, einen Van oder einen Light-Truck, aufweisend eine erfindungsgemäße Wulstverstärkerlage, zeichnet sich durch den weiterhin guten Elastizitätsmodul der Lage, einen geringeren Rollwiderstand sowie ein nahezu gleichbleibendes Reifengewicht aus.

Entsprechende Vorteile werden auch bei der Verwendung der vorbeschriebenen Festigkeitsträgerlage zur Herstellung von weiteren elastomeren Erzeugnissen, wie Fördergurte, Antriebsriemen, Schläuche und Luftfederbälge erzielt.

In der Tabelle 1 sind Ausführungsbeispiele von Korden angeführt, die sich für eine erfindungsgemäße Festigkeitsträgerlage eignen. Eine erfindungsgemäße Festigkeitsträgerlage kann die angeführten Korde als Festigkeitsträger aufweisen. Die Korde der erfindungsgemäßen Festigkeitsträgerlage können alle die gleiche Konstruktion aufweisen. Angegeben sind für jeden Kord die Feinheiten der zwei Garne sowie die entsprechende gewichtete Differenz der Feinheiten der beiden Garne sowie die Summe der Feinheiten der beiden Garne des Kordes. So weist der Kord Nr. 1 die Konstruktion 550 dtex HMNS-PET + 470 dtex PA 6.6, die gewichtete Differenz der Feinheiten der beiden Garne von 0,078 und eine Summe der Feinheiten der beiden Garne von 1020 dtex auf. Bevorzugt weisen alle Korde einer Festigkeitsträgerlage die gleiche Konstruktion auf. Die in der Tabelle beispielhaft angegebenen Korde eignen sich hervorragend für den Einsatz in einer Festigkeitsträgerlage eines Reifens, insbesondere in der Gürtelbandage und/oder der Wulstverstärkung.

**Tabelle 1**

| Kord Nr. | Feinheit [dtex] Garn aus HMNS-PET | Feinheit [dtex] Garn aus PA 6.6 | gewichtete Differenz der Feinheiten | Summe der Feinheiten [dtex] |
|---|---|---|---|---|
| 1 | 550 | 470 | 0,078 | 1020 |
| 2 | 550 | 350 | 0,222 | 900 |
| 3 | 360 | 350 | 0,014 | 710 |
| 4 | 360 | 312 | 0,071 | 672 |
| 5 | 360 | 235 | 0,210 | 595 |
| 6 | 275 | 235 | 0,078 | 510 |

Alle in dieser Beschreibung wiedergegebenen Ausführungsformen der erfindungsgemäßen Festigkeitsträgerlage und des erfindungsgemäßen Fahrzeugluftreifens stellen Beispiele der Ausgestaltung der Erfindung dar und sind nicht einschränkend zu sehen. Entsprechend sind auch durch einzelne oder mehrere Merkmale einer Ausführungsform alleine oder die Kombination der Merkmale verschiedener Ausführungsformen weitere Ausführungsformen der Erfindung gegeben, die Gegenstand der Erfindung sind, soweit diese nicht explizit anders in der Beschreibung erläutert wird. Ferner sind auch Kombinationen von bevorzugten und besonders bevorzugten Ausführungsformen untereinander miteinander kombinierbar.

Weitere Merkmale, Vorteile und Einzelheiten der Erfindung werden nun anhand der schematischen Zeichnung, die ein Ausführungsbeispiel darstellt, näher erläutert. Dabei zeigt die
Fig. 1 einen radialen Querschnitt durch einen erfindungsgemäßen Fahrzeugluftreifen;
Fig. 2 zeigt einen Schnitt durch eine erfindungsgemäße Festigkeitsträgerlage.

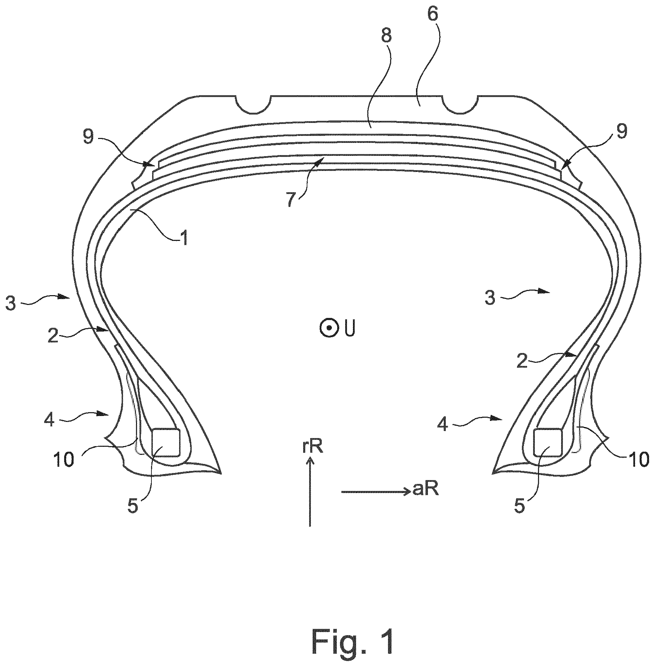

Die Figur 1 zeigt einen radialen Querschnitt durch einen erfindungsgemäßen Fahrzeugluftreifen für einen Personenkraftwagen aufweisend zumindest eine erfindungsgemäße Festigkeitsträgerlage 8, 10. Die Erfindung eignet sich aber ebenso für einen Reifen für einen Van oder einen Light-Truck. Der Fahrzeugluftreifen weist zumindest eine erfindungsgemäße Festigkeitsträgerlage auf. Die wesentlichen Bauteile, aus welchen sich der dargestellte Fahrzeugluftreifen zusammensetzt, sind eine weitgehend luftundurchlässige Innenschicht 1, eine Karkasse 2 in insbesondere radialer Bauart mit insbesondere textilen Karkassfestigkeitsträgern, die in herkömmlicher Weise vom Zenitbereich des Fahrzeugluftreifens über die Seitenwände 3 bis in die Wulstbereiche 4 reicht und dort durch Umschlingen zugfester Wulstkerne 5 verankert ist, einen radial außerhalb der Karkasse befindlichen profilierten Laufstreifen 6 und einen zwischen dem Laufstreifen 6 und der Karkasse 2 angeordneten, insbesondere zwei Verstärkungslagen beinhaltenden Gürtel 7, welcher radial außen mit der Gürtelbandage abgedeckt ist, welche in diesem Ausführungsbeispiel genau eine Gürtelbandagenlage 8 umfasst. Die Gürtelbandagenlage 8 deckt die Gürtelkanten 9 ab und beinhaltet Festigkeitsträger, die in einem Winkel von 0° bis 5° zur Umfangsrichtung parallel zueinander entlang der axialen Breite des Reifens gewickelt und in elastomeres Material eingebettet sind. Weiter weist der Fahrzeugluftreifen zumindest eine Wulstverstärkerlage 10 auf. Die Wulstverstärkerlage 10 ist ganz oder teilweise im Wulstbereich 4 angeordnet. Die Wulstverstärkerlage 10 ist axial außerhalb und anschließend an die Karkasse 2 positioniert. Die Wulstverstärkerlage 10 ist ringkreisförmig im Bereich des Wulstes um den Reifen umlaufend angeordnet.

Der erfindungsgemäße Reifen kann zumindest eine erfindungsgemäß ausgeführte Gürtelbandagenlage 8 und / oder zumindest eine erfindungsgemäß ausgeführte Wulstverstärkerlage 10 aufweisen. Der Reifen kann auch ohne Wulstverstärker und nur mit erfindungsgemäßer Gürtelbandagenlage 8 ausgeführt sein.

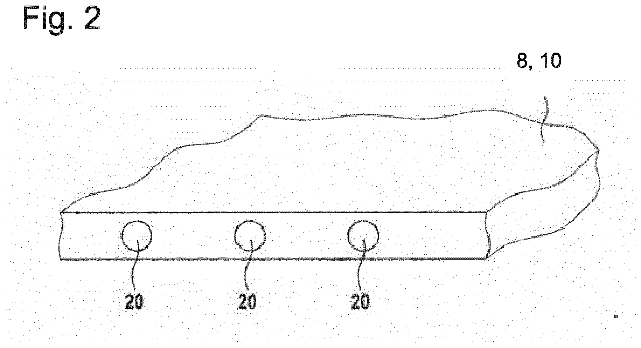

Die Korde 20 der erfindungsgemäßen Festigkeitsträgerlage 8, 10 sind innerhalb der jeweiligen Lage im Wesentlichen parallel zueinander angeordnet und in elastomeres Material eingebettet, wobei die Korde 20 jeweils genau zwei Garnen aufweisen, wobei die beiden Garne miteinander endverdreht sind, wobei die Summe der Feinheiten der beiden Garne maximal 1030 dtex beträgt. Die Festigkeitsträgerlage 8, 10 kann wie in der Fig. 2 dargestellt ausgeführt sein.

Ein Garn der beiden Garne ist ein Garn aus Polyamid 6.6 (PA 6.6), ein weiteres Garn der beiden Garne ist ein Garn aus high-modulus-normal-shrinkage - Polyethylenterephthalat (HMNS - PET). Das Garn aus HMNS-PET weist eine größere Feinheit auf als das Garn aus PA 6.6. Die gewichtete Differenz der Feinheiten der beiden Garne ist größer als 0 und maximal 0,23.

Die Korde 20 können jeweils eine Feinheit von 510 dtex bis 1020 dtex, bevorzugt von 595 dtex bis 900 dtex, besonders bevorzugt von 672 dtex bis 710 dtex, aufweisen.

Die gewichtete Differenz der Feinheiten der beiden Garne der Korde 20 kann 0,01 bis 0,21, bevorzugt 0,014 bis 0,08, besonders bevorzugt 0,014 bis 0,072, betragen. Die gewichtete Differenz der Feinheiten der beiden Garne der Korde 20 kann aber auch 0,20 bis 0,23 betragen.

Die Korde 20 können sich dadurch auszeichnen, dass das Garn aus HMNS-PET eine Feinheit von 360 dtex aufweist, bevorzugt dass das Garn aus HMNS-PET eine Feinheit von 360 dtex und das Garn aus PA 6.6 eine Feinheit von 235 dtex bis 350 dtex aufweist, besonders bevorzugt dass das Garn aus HMNS-PET eine Feinheit von 360 dtex und das Garn aus PA 6.6 eine Feinheit von 312 dtex bis 350 dtex aufweist.

Die Korde 20 können sich auch dadurch auszeichnen, dass das Garn aus PA 6.6 eine Feinheit von 235 dtex aufweist, bevorzugt dass das Garn aus PA 6.6 eine Feinheit von 235 dtex und das Garn aus HMNS-PET eine Feinheit von 275 dtex bis 360 dtex aufweist.

Die Korde 20 können sich auch dadurch auszeichnen, dass das Garn aus HMNS-PET eine Feinheit von 550 dtex aufweist, bevorzugt dass das Garn aus HMNS-PET eine Feinheit von 550 dtex und das Garn aus PA 6.6 eine Feinheit von 350 dtex bis 470 dtex aufweist.

Die Korde 20 der erfindungsgemäßen Festigkeitsträgerlage 8, 10 können insbesondere gemäß den Ausführungsbeispielen der Tabelle 1 ausgeführt sein.

Der Twistfaktor der Korde 20 kann einen Wert von 130 bis 230, bevorzugt von 140 bis 220, besonders bevorzugt von 150 bis 210, aufweisen. Jedes Garn der erfindungsgemäßen Festigkeitsträgerlage kann in S- oder in Z- Richtung verdreht sein. Zweckmäßigerweise weisen die zwei Garne eines Kords die gleiche Drehrichtung auf. Sie sind also entweder alle in S- und/oder in Z- Richtung verdreht. Erfindungsgemäß sind die zwei Garne des Kordes in S- oder in Z-Richtung miteinander endverdreht. Zweckmäßigerweise ist die Drehrichtung zum Kord der Drehrichtung der Garne entgegengesetzt. Hierdurch sind interne Spannungen im Kord reduziert.

Um eine zuverlässige Haftung von textilen Festigkeitsträgern zum Gummi zu gewährleisten, ist es zweckmäßig, dass die Korde mit einer Haftimprägnierung zur Gewährleistung der Haftung der Festigkeitsträger zum Gummi versehen sind.

Die Korde 20 können mit einem Zwischenabstand von 0,20 mm bis 1,0 mm, bevorzugt von 0,30 mm bis 0,90 mm, besonders bevorzugt von 0,35 mm bis 0,80 mm, weitgehend parallel zueinander in der Festigkeitsträgerlage 8,10 angeordnet sein. Die Korde können mit einer Haftimprägnierung zur Gewährleistung der Haftung der Festigkeitsträger zum Gummi versehen sein.

### Bezugszeichenliste

### (Teil der Beschreibung)

- 1: Innenschicht
- 2: Karkasse
- 3: Seitenwand
- 4: Wulstbereich
- 5: Wulstkern
- 6: Laufstreifen
- 7: Gürtel
- 8: Gürtelbandagenlage
- 9: Gürtelkante
- 10: Wulstverstärkerlage
- 20: Kord

- aR: axiale Richtung
- rR: radiale Richtung
- U: Umfangsrichtung

## Patentansprüche

1. Festigkeitsträgerlage (8,10) für elastomere Erzeugnisse, insbesondere für eine Gürtelbandage eines Fahrzeugluftreifens, aufweisend Korde (20) als Festigkeitsträger, welche innerhalb der Lage im Wesentlichen parallel zueinander angeordnet und in elastomeres Material eingebettet sind, wobei die Korde jeweils genau zwei Garnen aufweisen, wobei die beiden Garne miteinander endverdreht sind, wobei die Summe der Feinheiten der beiden Garne maximal 1030 dtex beträgt und wobei ein Garn der beiden Garne ein Garn aus Polyamid 6.6 (PA 6.6) ist,
**dadurch gekennzeichnet, dass**
∘ ein weiteres Garn der beiden Garne des Kordes (20) ein Garn aus high-modulus-normal-shrinkage - Polyethylenterephthalat (HMNS - PET) ist,
∘ dass das Garn aus HMNS-PET eine größere Feinheit aufweist als das Garn aus PA 6.6 und
∘ dass die gewichtete Differenz der Feinheiten der beiden Garne größer als 0 und maximal 0,23 beträgt, wobei die gewichtete Differenz der Feinheiten der beiden Garne definiert ist als das Verhältnis des Betrags der Differenz der Feinheiten der beiden Garne des Kordes zur Summe der Feinheiten der beiden Garne des Kordes.

2. Festigkeitsträgerlage (8,10) gemäß Anspruch 1, **dadurch gekennzeichnet, dass** die Korde (20) jeweils eine Feinheit von 510 dtex bis 1020 dtex, bevorzugt von 595 dtex bis 900 dtex, besonders bevorzugt von 672 dtex bis 710 dtex, aufweisen.

3. Festigkeitsträgerlage (8,10) gemäß einem oder mehreren der vorhergehenden Ansprüche, **dadurch gekennzeichnet, dass** die gewichtete Differenz der Feinheiten der beiden Garne der Korde (20) 0,01 bis 0,21, bevorzugt 0,014 bis 0,08, besonders bevorzugt 0,014 bis 0,072, beträgt.

4. Festigkeitsträgerlage (8,10) gemäß einem oder mehreren der vorhergehenden Ansprüche, **dadurch gekennzeichnet, dass** die gewichtete Differenz der Feinheiten der beiden Garne der Korde (20) 0,20 bis 0,23 beträgt.

5. Festigkeitsträgerlage (8,10) gemäß einem oder mehreren der vorhergehenden Ansprüche, **dadurch gekennzeichnet, dass** das Garn aus HMNS-PET eine Feinheit von 360 dtex aufweist, bevorzugt dass das Garn aus HMNS-PET eine Feinheit von 360 dtex und das Garn aus PA 6.6 eine Feinheit von 235 dtex bis 350 dtex aufweist, besonders bevorzugt, dass das Garn aus HMNS-PET eine Feinheit von 360 dtex und das Garn aus PA 6.6 eine Feinheit von 312 dtex bis 350 dtex aufweist.

6. Festigkeitsträgerlage (8,10) gemäß einem oder mehreren der vorhergehenden Ansprüche, **dadurch gekennzeichnet, dass** das Garn aus PA 6.6 eine Feinheit von 235 dtex aufweist, bevorzugt dass das Garn aus PA 6.6 eine Feinheit von 235 dtex und das Garn aus HMNS-PET eine Feinheit von 275 dtex bis 360 dtex aufweist.

7. Festigkeitsträgerlage (8,10) gemäß einem oder mehreren der vorhergehenden Ansprüche, **dadurch gekennzeichnet, dass** das Garn aus HMNS-PET eine Feinheit von 550 dtex aufweist, bevorzugt dass das Garn aus HMNS-PET eine Feinheit von 550 dtex und das Garn aus PA 6.6 eine Feinheit von 350 dtex bis 470 dtex aufweist.

8. Festigkeitsträgerlage (8,10) gemäß einem oder mehreren der vorhergehenden Ansprüche, **dadurch gekennzeichnet, dass** der Twistfaktor der Korde (20) einen Wert von 130 bis 230, bevorzugt von 140 bis 220, besonders bevorzugt von 150 bis 210, aufweist.

9. Festigkeitsträgerlage (8,10) gemäß einem oder mehreren der vorhergehenden Ansprüche, **dadurch gekennzeichnet, dass** die Korde (20) mit einem Zwischenabstand von 0,20 mm bis 1,0 mm, bevorzugt von 0,30 mm bis 0,90 mm, besonders bevorzugt von 0,35 mm bis 0,80 mm, angeordnet sind.

10. Fahrzeugluftreifen aufweisend eine Festigkeitsträgerlage (8,10) gemäß zumindest einem der Ansprüche 1 bis 9.

11. Fahrzeugluftreifen gemäß Anspruch 10, **dadurch gekennzeichnet, dass** die Festigkeitsträgerlage eine Gürtelbandagenlage (8) und/oder eine Wulstverstärkerlage (10) ist.

## Claims

1. Strength member ply (8, 10) for elastomeric articles, in particular for a belt bandage of a pneumatic vehicle tire, comprising cords (20) as strength members which are arranged substantially parallel to one another within the ply and are embedded in elastomeric material, wherein the cords each comprise precisely two yarns, wherein the two yarns are end-twisted together, wherein the sum of the finenesses of the two yarns is at most 1030 dtex and wherein one yarn of the two yarns is a yarn composed of polyamide 6.6 (PA 6.6),
**characterized in that**
∘ a further yarn of the two yarns of the cord (20) is a yarn composed of high-modulus normal-shrinkage polyethylene terephthalate (HMNS-PET),
∘ **in that** the yarn composed of HMNS-PET has a higher fineness than the yarn composed of PA 6.6 and
∘ **in that** the weighted difference in the finenesses of the two yarns is greater than 0 and at most 0.23, wherein the weighted difference in the finenesses of the two yarns is defined as the ratio of the magnitude of the difference in the finenesses of the two yarns of the cord to the sum of the finenesses of the two yarns of the cord.

2. Strength member ply (8, 10) according to Claim 1, **characterized in that** the cords (20) each have a fineness of 510 dtex to 1020 dtex, preferably of 595 dtex to 900 dtex, particularly preferably of 672 dtex to 710 dtex.

3. Strength member ply (8, 10) according to one or more of the preceding claims, **characterized in that** the weighted difference in the finenesses of the two yarns of the cords (20) is 0.01 to 0.21, preferably 0.014 to 0.08, particularly preferably 0.014 to 0.072.

4. Strength member ply (8, 10) according to one or more of the preceding claims, **characterized in that** the weighted difference in the finenesses of the two yarns of the cords (20) is 0.20 to 0.23.

5. Strength member ply (8, 10) according to one or more of the preceding claims, **characterized in that** the yarn composed of HMNS-PET has a fineness of 360 dtex, preferably **in that** the yarn composed of HMNS-PET has a fineness of 360 dtex and the yarn composed of PA 6.6 has a fineness of 235 dtex to 350 dtex, particularly preferably **in that** the yarn composed of HMNS-PET has a fineness of 360 dtex and the yarn composed of PA 6.6 has a fineness of 312 dtex to 350 dtex.

6. Strength member ply (8, 10) according to one or more of the preceding claims, **characterized in that** the yarn composed of PA 6.6 has a fineness of 235 dtex, preferably **in that** the yarn composed of PA 6.6 has a fineness of 235 dtex and the yarn composed of HMNS-PET has a fineness of 275 dtex to 360 dtex.

7. Strength member ply (8, 10) according to one or more of the preceding claims, **characterized in that** the yarn composed of HMNS-PET has a fineness of 550 dtex, preferably **in that** the yarn composed of HMNS-PET has a fineness of 550 dtex and the yarn composed of PA 6.6 has a fineness of 350 dtex to 470 dtex.

8. Strength member ply (8, 10) according to one or more of the preceding claims, **characterized in that** the twist factor of the cords (20) has a value of 130 to 230, preferably of 140 to 220, particularly preferably of 150 to 210.

9. Strength member ply (8, 10) according to one or more of the preceding claims, **characterized in that** the cords (20) are arranged with an intermediate spacing of 0.20 mm to 1.0 mm, preferably of 0.30 mm to 0.90 mm, particularly preferably of 0.35 mm to 0.80 mm.

10. Pneumatic vehicle tire comprising a strength member ply (8, 10) according to at least one of Claims 1 to 9.

11. Pneumatic vehicle tire according to Claim 10, **characterized in that** the strength member ply is a belt bandage ply (8) and/or a bead-reinforcement ply (10).

## Revendications

1. Couche de renforcement (8, 10) pour produits élastomères, en particulier pour une nappe ceinture d'un pneumatique d'automobile, comprenant des câbles (20) en tant que renforcement, qui sont disposés essentiellement parallèlement entre eux à l'intérieur de la couche et incorporés dans de la matière élastomère, les câbles comportant chacun exactement deux fils, les deux fils étant torsadés l'un avec l'autre, la somme des finesses des deux fils étant au maximum de 1 030 et un fil des deux fils étant un fil en polyamide 6.6 (PA 6.6),
**caractérisée en ce que**
∘ un autre fil des deux fils du câble (20) est un fil en poly(éthylène téréphtalate) à haut module-faible retrait (HMNS - PET),
∘ le fil en HMNS-PET présente une plus grande finesse que le fil en PA 6.6 et
∘ **en ce que** la différence pondérée des finesses des deux fils est supérieure à 0 et au maximum de 0,23, la différence pondérée des finesses des deux fils étant définie comme le rapport de la valeur de la différence des finesses des deux fils du câble à la somme des finesses des deux fils du câble.

2. Couche de renforcement (8, 10) selon la revendication 1, **caractérisée en ce que** les câbles (20) présentent chacun une finesse de 510 dtex à 1 020 dtex, de préférence de 595 dtex à 900 dtex, de façon particulièrement préférée de 672 dtex à 710 dtex.

3. Couche de renforcement (8, 10) selon une ou plusieurs des revendications précédentes, **caractérisée en ce que** la différence pondérée des finesses des deux fils des câbles (20) vaut de 0,01 à 0,21, de préférence 0,014 à 0,08, de façon particulièrement préférée 0,014 à 0,072.

4. Couche de renforcement (8, 10) selon une ou plusieurs des revendications précédentes, **caractérisée en ce que** la différence pondérée des finesses des deux fils des câbles (20) vaut de 0,20 à 0,23.

5. Couche de renforcement (8, 10) selon une ou plusieurs des revendications précédentes, **caractérisée en ce que** le fil en HMNS-PET présente une finesse de 360 dtex, de préférence **en ce que** le fil en HMNS-PET présente une finesse de 360 dtex et le fil en PA 6.6 présente une finesse de 235 dtex à 350 dtex, de façon particulièrement préférée **en ce que** le fil en HMNS-PET présente une finesse de 360 dtex et le fil en PA 6.6 présente une finesse de 312 dtex à 350 dtex.

6. Couche de renforcement (8, 10) selon une ou plusieurs des revendications précédentes, **caractérisée en ce que** le fil en PA 6.6 présente une finesse de 235 dtex, de préférence **en ce que** le fil en PA 6.6 présente une finesse de 235 dtex et le fil en HMNS-PET présente une finesse de 275 dtex à 360 dtex.

7. Couche de renforcement (8, 10) selon une ou plusieurs des revendications précédentes, **caractérisée en ce que** le fil en HMNS-PET présente une finesse de 550 dtex, de préférence **en ce que** le fil en HMNS-PET présente une finesse de 550 dtex et le fil en PA 6.6 présente une finesse de 350 dtex à 470 dtex.

8. Couche de renforcement (8, 10) selon une ou plusieurs des revendications précédentes, **caractérisée en ce que** le facteur de torsion des câbles (20) a une valeur de 130 à 230, de préférence de 140 à 220, de façon particulièrement préférée de 150 à 210.

9. Couche de renforcement (8, 10) selon une ou plusieurs des revendications précédentes, **caractérisée en ce que** les câbles (20) sont disposés avec un écart entre eux de 0,20 mm à 1,0 mm, de préférence de 0,30 mm à 0,90 mm, de façon particulièrement préférée de 0,35 mm à 0,80 mm.

10. Pneumatique de véhicule, comprenant une couche de renforcement (8, 10) selon au moins l'une des revendications 1 à 9.

11. Pneumatique de véhicule selon la revendication 10, **caractérisé en ce que** la couche de renforcement est une couche (8) de nappe ceinture et/ou une couche de renforcement (10) du talon.
